# EUROPEAN PATENT APPLICATION

(11) **EP 4 338 997 A1**
(43) Date of publication of application: **20.03.2024**
(21) Application number: 22806448.1
(22) Date of filing: 20.04.2022
(51) Int. Cl.: B60K 6/44, B60K 6/40, B60K 25/06, B60W 20/15, B60W 10/08, B60W 10/06

(54) **HYBRID POWER SYSTEM FOR CRANE, CONTROL METHOD, VIRTUAL DEVICE AND CRANE**

(30) Priority: 14.05.2021 CN 202110530384; 14.05.2021 CN 202121042009 U
(71) Applicant: Sany Mobile Cranes Co., Ltd., Changsha, Hunan 410000 (CN)
(72) Inventor: HE, Jinjun, Changsha, Hunan 410000 (CN); YUAN, Dan, Changsha, Hunan 410000 (CN); LEI, Xianming, Changsha, Hunan 410000 (CN)
(74) Representative: Osterhoff, Utz
(86) International application number: PCT/CN2022/087912
(87) International publication number: WO 2022/237478

(57) **Abstract**

Disclosed are a hybrid power system of a crane and a control method thereof, a virtual device and a crane. The hybrid power system includes: an output end of an engine (10) connected to an input end of a gearbox (20); one end of a power take-off (30) is connected to an output end of the gearbox (20) and the other end of the power take-off (30) is connected to an input end of a drive motor (40); an output end of the drive motor (40) is connected to the multi-link oil pump (50); a central controller (90) is connected to the engine (10) and the hybrid controller (100) respectively; the hybrid controller (100) is connected to the drive motor (40) and the power source (60) respectively; the engine (10), the gearbox (20), the power take-off (30), the drive motor (40) and the multi-link oil pump (50) are connected to form a first hydraulic path for providing power for the loading operation of the crane; the power source (60), the drive motor (40) and the multi-link oil pump (50) are connected to form a second hydraulic path for providing power for the loading operation of the crane. In the hybrid power system, by integrating the output shaft of the drive motor (40) and the power take-off (30), so that the output shaft can be driven by a motor stator or the engine (10), which optimizes the power distribution of the hybrid power system.

## Description

### TECHNICAL FIELD

The present application relates to the technical field of construction machinery, and in particular to a hybrid power system of a crane and a control method thereof, a virtual device and a crane.

### BACKGROUND

With the development of technology, as well as the country's emphasis on engineering mechanization and the support of relevant policies, the pace of electrification and intelligent development of engineering hoisting machinery has been further accelerated, and the functional requirements and endurance capabilities of engineering hoisting machinery have also been continuously increased. There are many shortcomings in the traditional internal combustion engine supplying energy to the crane. When the crane is operating on the truck, the engine emits a large amount of harmful gases and consumes a lot of fuel, which has low economic efficient and is not in line with the current trend of pursuing environmental protection and sustainable development. However, hoisting machinery that uses pure electricity as the power source inevitably has problems such as poor endurance and high usage costs because the power battery takes care of both vehicle driving and loading operations. Once the power battery is exhausted or the battery fails, and the operating environment cannot be charged and serviced in time, which will inevitably affect the duration and efficiency of the work. Currently, most existing cranes use a single electric motor or engine to provide energy for travel and operation functions. In order to meet the complex construction site operating environment of the hoisting machinery, the selected power of the engine or electric motor is very large, resulting in overweight of the vehicle and increased usage costs, while failing to achieve the energy-saving effects.

### SUMMARY

The present application proposes a hybrid power system of a crane to solve the following problems: in the related art, the selected power of a single driving device such as an engine or a motor is too large under the complex working conditions of the crane, as well as the power distribution of the hybrid power system between the motor and the engine is unreasonable, resulting in the defects of low power utilization, poor economy and high energy consumption. By integrating the output shaft of the drive motor and the power take off, the output shaft can be driven by a motor stator or the engine, which optimizes the power distribution of the hybrid power system and realizes dynamic matching between the drive motor and the engine of the hybrid power system. In addition, a central controller is connected with a hybrid controller, and the operation of the traveling and hybrid control of the crane can be directly realized through the central controller.

The present application also proposes a control method for the hybrid power system of the crane to solve the following problems: in the related art, the selected power of a single driving device such as an engine or a motor is too large under the complex working conditions of the crane, as well as the power distribution of the hybrid power system between the motor and the engine is unreasonable, resulting in the defects of low power utilization, poor economy and high energy consumption. By integrating the output shaft of the drive motor and the power take off, the output shaft can be driven by the motor stator or the engine, which optimizes the power distribution of the hybrid power system and realizes dynamic matching between the drive motor and the engine of the hybrid power system.

The present application also proposes a virtual device.

The present application also proposes a crane.

The hybrid power system for the crane according to a first aspect of the present application includes: an engine, a gearbox, a power take-off, a drive motor, a multi-link oil pump, a power source, a central controller and a hybrid controller.

An output end of the engine is connected to an input end of the gearbox.

One end of the power take-off is connected to an output end of the gearbox and the other end of the power take-off is connected to an input end of the drive motor.

An output end of the drive motor is connected to the multi-link oil pump.

The central controller is connected to the engine and the hybrid controller respectively.

The hybrid controller is connected to the drive motor and the power source respectively.

The engine, the gearbox, the power take-off, the drive motor and the multi-link oil pump are connected to form a first hydraulic path for providing power for loading operation of the crane.

The power source, the drive motor and the multi-link oil pump are connected to form a second hydraulic path for providing power for the loading operation of the crane.

According to an embodiment of the present application, the power source includes: a power grid and/or a power battery.

The engine, the gearbox, the power take-off, the drive motor and the power battery are connected to form a first charging path for charging the power battery; and the power grid, the drive motor and the power battery are connected to form a second charging path for charging the power battery.

Specifically, this embodiment provides an implementation method of providing electrical energy for the power battery. By providing the power source, the continuous operation of the drive motor is guaranteed.

Furthermore, by providing the power source as the power battery, when there is no power grid access, the power battery can be selected to supply power the drive motor to ensure the operation of the drive motor.

Furthermore, when the power battery is depleted, the engine can be used to drive the drive motor to work, thereby charging the power source to ensure the electric energy reserve of the power source. Alternatively, the power grid of the motor can be used to provide energy for the drive motor to work, thereby charging the power source.

It should be noted that in this embodiment, the drive motor and the engine can be driven in a single or mixed manner. When only the drive motor needs to work independently, the engine is in a shutdown state, which solves the problem of insufficient power, energy saving and emission reduction in the crane under complex working conditions. The dynamic distribution of the power between the drive motor and the engine can adapt to the power requirements of various operating conditions of the crane while ensuring emissions and economy.

According to an embodiment of the present application, an electric load is further included, and the electric load is connected to the power source.

The power source and the electric load are connected to form a first electric power path for providing power to the electric load; and the engine, the gearbox, the power take-off, the drive motor and the electric load are connected to form a second electric power path for providing power to the electric load.

Specifically, this embodiment provides an implementation of the electric load. By connecting the electric load to the power source, electric energy can be obtained from the power source to drive the electric load, meeting more applications.

In an application scenario, the electric load can be a winding motor and/or a slewing motor.

According to an embodiment of the present application, an angle gear box is further included, an input end of the angle gear box is connected to the power take-off, and an output end of the angle gear box is connected to the drive motor.

Specifically, this embodiment provides an implementation in which the angle gear box is provided between the power take-off and the motor. By providing the angle gear box, the output angle between the power take-off and the motor is changed, which provides more possibilities for the control arrangement of the hybrid power system.

According to an embodiment of the present application, a transmission shaft and a drive axle are included, one end of the transmission shaft is connected to the other output end of the gearbox, and the other end of the transmission shaft is connected to the drive axle.

Specifically, this embodiment provides an implementation of the transmission shaft and the drive axle. By providing the transmission shaft connected to the gearbox and the drive axle connected to the transmission shaft, the engine not only forms a power chain on one side of the power take-off, but also forms a power chain on the side of the drive axle, so as to meet the power demand of the crane to travel.

According to a second aspect of the present application, a control method for the hybrid power system of the crane is provided, including:
obtaining a state parameter of the crane in response to a working signal of the crane; and
generating a control decision for controlling the hybrid power system based on the state parameter.

According to an embodiment of the present application, the step of generating the control decision for controlling the hybrid power system based on the state parameter includes:
obtaining a load parameter of loading operation of the crane, sending a start signal to the drive motor in response to that the load parameter is less than a preset load parameter; and
driving, via the drive motor, the multi-link oil pump to operate and realize the loading operation of the crane.

Specifically, this embodiment provides an implementation of generating the control decision based on the load parameter of the crane. The specific control decision is determined based on the load parameter of the loading operation of the crane. When the load parameter of the loading operation of the crane is lower than the preset load parameter, the drive motor receives electric energy from the power source or an external power grid, and drives the multi-link oil pump to work to complete the loading operation of the crane.

According to an embodiment of the present application, the step of driving, via the drive motor, the multi-link oil pump to operate and realize the loading operation of the crane includes:
obtaining a power parameter of the crane, in response to that the crane is not connected to the power grid, sending a start signal to the power source for providing electrical energy to the drive motor.

Specifically, this embodiment provides an implementation for generating the control decision based on the power parameter of the crane. The determination is made based on the power parameter of the crane. When the crane is not connected to the power grid, the drive motor directly obtains electrical energy from the power source to achieve the loading operation of the crane.

According to an embodiment of the present application, the step of generating the control decision for controlling the hybrid power system based on the state parameter includes:
obtaining the power parameter of the crane, in response to that the crane is not connected to the power grid and an energy reserve of the power source is lower than a preset value, sending a start signal to the engine, the engine drives the drive motor to rotate, and the drive motor charges the power source.

Specifically, this embodiment provides another implementation of generating the control decision based on the power parameter of the crane. The determination is made based on the power parameter of the crane. When the crane is not connected to the power grid and the energy reserve of the power battery is lower than the preset value, the engine is started. On the one hand, the engine provides power for the drive motor, and the drive motor charges the power battery. On the other hand, the engine can also drive the multi-link oil pump to operate and realize the loading operation of the crane.

It should be noted that in this embodiment, the power source includes the power grid and the power battery.

According to an embodiment of the present application, the step of generating the control decision for controlling the hybrid power system based on the state parameter includes:
obtaining the power parameter of the crane, in response to that the crane is connected to the power grid and an energy reserve of the power source is lower than a preset value, sending a start signal to the drive motor, and the drive motor charges the power source.

Specifically, this embodiment provides another implementation of generating the control decision based on the power parameter of the crane. The determination is made based on the power parameter of the crane. When the crane is connected to the power grid and the energy reserve of the power battery is lower than the preset value, the drive motor obtains electrical energy from the power grid to work and charge the power battery.

It should be noted that in this embodiment, the power source includes the power grid and the power battery.

According to an embodiment of the present application, the step of generating the control decision for controlling the hybrid power system based on the state parameter includes:
obtaining a load parameter of loading operation of the crane, in response to that the load parameter is greater than a preset load parameter, sending a start signal to the engine; and
driving, via the engine, the multi-link oil pump to operate and realize the loading operation of the crane.

Specifically, this embodiment provides another implementation of generating the control decision based on the load parameter of the crane. The specific control decision is determined based on the load parameter of the loading operation of the crane. When the load parameter of the loading operation of the crane is higher than the preset load parameter, the engine drives the multi-link oil pump through the gearbox and power take-off, thereby realizing the loading operation of the crane.

In an application scenario, when the load parameter is higher than the preset load parameter, the drive motor can work together with the engine to form a hybrid system, so as to meet the action requirements of the multi-link oil pump during the loading operation.

According to a third aspect of the present application, a virtual device is provided, including a memory and a processor.

The memory and the processor communication with each other through a bus.

Computer instructions executable on the processor are stored in the memory.

When the processor calls the computer program instructions, the control method for the hybrid power system of the crane described above can be implemented.

According to a fourth aspect of the present application, a crane is provided. The crane includes the above-mentioned hybrid power system of the crane, or adopts the above-mentioned control method for the hybrid power system of the crane when performing the loading operation, or includes the above-mentioned virtual device.

The above one or more technical solutions in the present application have at least one of the following technical effects: the hybrid power system of the crane and control method thereof, the virtual device and the crane provided by the present application, by integrating the output shaft of the drive motor and the power take-off, so that the output shaft can be driven by the motor stator or the engine, which can optimizes the power distribution of the hybrid power system and achieves dynamic matching of the drive motor and engine in the hybrid power system. The central controller is connected to the hybrid controller, the crane is connected to the central controller, and operations of the traveling and hybrid control of the crane can be directly realized through the central controller.

Additional aspects and advantages of the present application will be set forth in part in the following description, which will become apparent from the following description, or will be learned through practice of the present application.

### BRIEF DESCRIPTION OF THE DRAWINGS

In order to describe the technical solutions in the present application or in the related art more clearly, the accompanying drawings required to be used in the description of the embodiments or the related art will be briefly introduced below. Obviously, the accompanying drawings in the following description are only some embodiments of the present application. For those skilled in the art, other drawings can be obtained based on the structures shown in these drawings without creative efforts.
FIG. 1 is a first schematic diagram of a layout relationship of a hybrid power system of a crane provided by the present application.
FIG. 2 is a second schematic diagram of the layout relationship of the hybrid power system of the crane provided by the present application.
FIG. 3 is a third schematic diagram of the layout relationship of the hybrid power system of the crane provided by the present application.
FIG. 4 is a fourth schematic diagram of the layout relationship of the hybrid power system of the crane provided by the present application.
FIG. 5 is a schematic flow chart of a control method for the hybrid power system of the crane provided by the present application.

Reference signs:
10. Engine; 20. Gearbox; 30. Power take-off; 40. Drive motor; 50. Multi-link oil pump; 60. Power source; 70. Transmission shaft; 80. Drive axle; 90. Central controller; 100. Hybrid controller; 110. Angle gear box; 120. Electric load.

### DETAILED DESCRIPTION OF THE EMBODIMENTS

In order to make the purpose, technical solutions and advantages of the embodiments of the present application clearer, the technical solutions in the embodiments of the present application will be clearly and completely described below with reference to the accompanying drawings in the embodiments of the present application. Obviously, the described embodiments are only some rather than all of the embodiments of the present application. Based on the embodiments in the present application, all other embodiments obtained by those skilled in the art without creative efforts fall within the scope of the present application.

In the description of the embodiments of the present application, it should be noted that orientations or positional relationships indicated by the terms such as "center", "longitudinal", "lateral", "upper", "lower", "front", "back", "left" and "right", "vertical", "horizontal", "top", "bottom", "inner" and "outer" are the orientations or positional relationships shown based on the accompanying drawings, and are only for the convenience of describing the embodiments of the present application and simplifying the description, rather than indicate or imply that the devices or elements referred to must have a specific orientation, be constructed and operated in a specific orientation, therefore it cannot be understood as a limitation on the embodiments of the present application. Furthermore, the terms "first", "second" and "third" are only used for descriptive purposes and are not to be understood as indicating or implying relative importance.

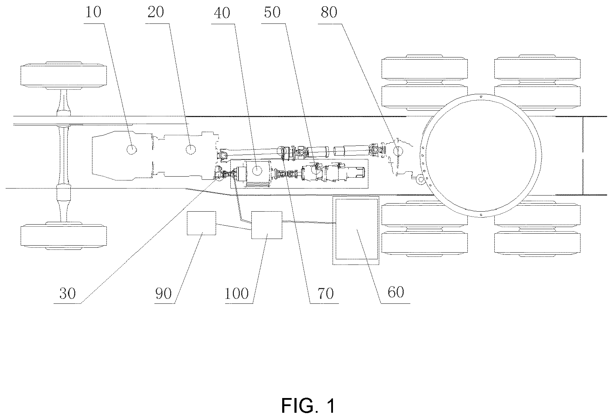

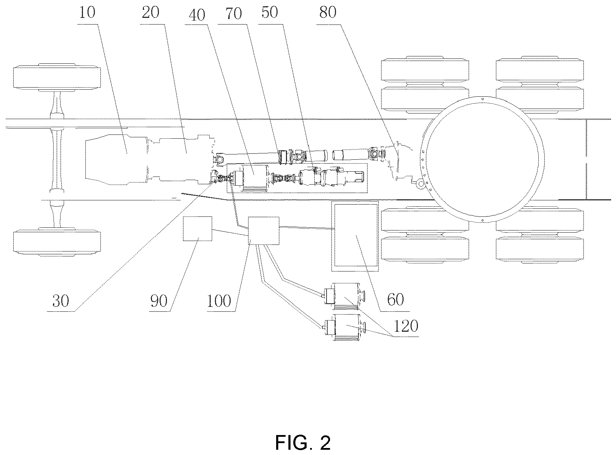

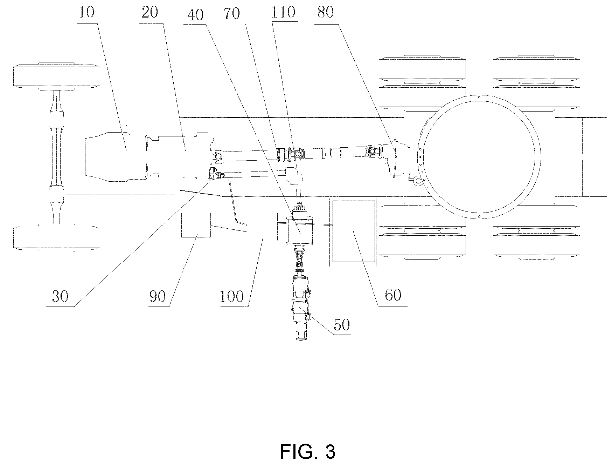

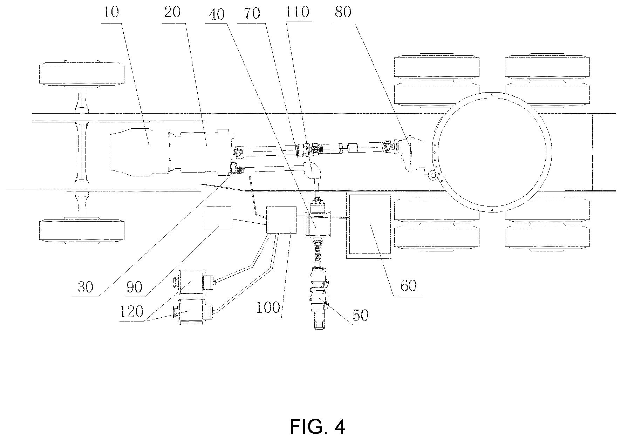

In some specific embodiments of the present application, as shown in FIG. 1 to FIG. 4, this solution provides a hybrid power system of a crane, which includes an engine 10, a gearbox 20, a power take-off 30, a drive motor 40, a multi-link oil pump 50, a power source 60, a central controller 90 and a hybrid controller 100. An output end of the engine 10 is connected to an input end of the gearbox 20; one end of the power take-off 30 is connected to an output end of the gearbox 20, and the other end of the power take-off 30 is connected to the input end of the drive motor 40; the output end of the drive motor 40 is connected to the multi-link oil pump 50; the central controller 90 is connected to the engine 10 and the hybrid controller 100 respectively; the hybrid controller 100 is connected to the drive motor 40 and the power source 60 respectively. The engine 10, the gearbox 20, the power take-off 30, the drive motor 40 and the multi-link oil pump 50 are connected to form a first hydraulic path for providing power for the loading operation of the crane; the power source 60, the drive motor 40 and the multi-link oil pump 50 are connected to form a second hydraulic path for providing power for the loading operation of the crane.

In detail, the present application proposes a hybrid power system of a crane to solve the following problems: in the related art, the selected power of a single driving device such as an engine 10 or a motor is too large under the complex working conditions of the crane, as well as the power distribution of the hybrid power system between the motor and the engine 10 is unreasonable, resulting in the defects of low power utilization, poor economy and high energy consumption.

By integrating the output shaft of the drive motor 40 and the power take-off 30, the output shaft can be driven by the motor stator or the engine 10, which optimizes the power distribution of the hybrid power system and realizes dynamic matching between the drive motor 40 and the engine 10 of the hybrid power system. In addition, the central controller 90 is connected with the hybrid controller 100, and the operation of the traveling and hybrid control of the crane can be directly realized through the central controller 90.

It should be noted that the central controller 90 serves as the overall control of the crane and is used to control operations such as the engine 10 and loading operation of the crane. The central controller 90 is also used to connect with the hybrid controller 100 and send corresponding operation instructions to the hybrid controller 100 to achieve corresponding control of the drive motor 40 and the power source 60 through the hybrid controller 100.

It should also be noted that the multi-link oil pump 50 provided by the present application at least includes a hydraulic pump and a working link.

In some possible embodiments of the present application, the power source 60 includes a power grid and/or a power battery. The engine 10, the gearbox 20, the power take-off 30, the drive motor 40 and the power battery are connected to form a first charging path for charging the power battery; and the power grid, the drive motor 40 and the power battery are connected to form a second charging path for charging the power battery.

Specifically, this embodiment provides an implementation method of providing electric energy for the power battery. By providing the power source 60, the continuous operation of the drive motor 40 is guaranteed.

Furthermore, by configuring the power source 60 as the power battery, when there is no power grid access, the power battery can be selected to supply power to the drive motor 40 to ensure the operation of the drive motor 40.

Furthermore, when the power battery is depleted, the engine 10 can be used to drive the drive motor 40 to work, thereby charging the power source 60 to ensure the electric energy reserve of the power source 60. Alternatively, the power grid of the motor can be used to provide energy for the driving motor 40 to work, thereby charging the power source 60.

It should be noted that in this embodiment, the drive motor 40 and the engine 10 can be driven in a single or mixed manner. When only the drive motor 40 needs to work independently, the engine 10 is in a shutdown state, which solves the problem of insufficient power, energy saving and emission reduction in cranes under complex working conditions. The dynamic distribution of the power between the drive motor 40 and the engine 10 can adapt to the power requirements of various operating conditions of the crane while ensuring emissions and economy.

In some possible embodiments of the present application, an electric load 120 is also included. The electric load 120 is connected to the power source 60, and the power source 60 and the electric load 120 are connected to form a first electric power path for providing power to the electric load 120. The engine 10, the gearbox 20, the power take-off 30, the drive motor 40 and the electric load 120 are connected to form a second electric power path for providing power to the electric load 120.

Specifically, this embodiment provides an implementation of the electric load 120. By connecting the electric load 120 to the power source 60, electric energy can be obtained from the power source 60 to drive the electric load 120, meeting more applications.

In an application scenario, the electric load 120 can be a winding motor and/or a slewing motor.

In some possible embodiments of the present application, an angle gear box 110 is also included. The input end of the angle gear box 110 is connected to the power take-off 30, and the output end of the angle gear box 110 is connected to the drive motor 40.

Specifically, this embodiment provides an implementation in which the angle gear box 110 is provided between the power take-off 30 and the motor. By providing the angle gear box 110, the output angle between the power take-off 30 and the motor is changed, which provides more possibilities for the control arrangement of the hybrid power system.

In an application scenario, the specific number of the angle gear box 110 can be set to one, or two or more.

In some possible embodiments of the present application, a transmission shaft 70 and a drive axle 80 are also included. One end of the transmission shaft 70 is connected to the other output end of the gearbox 20, and the other end of the transmission shaft 70 is connected to the drive axle 80.

Specifically, this embodiment provides an implementation of the transmission shaft 70 and the drive axle 80. By providing the transmission shaft 70 connected to the gearbox 20 and the drive axle 80 connected to the transmission shaft 70, the engine 10 not only forms a power chain on one side of the power take-off 30, but also forms a power chain on the side of the drive axle 80, which meets the power demand for the crane to travel.

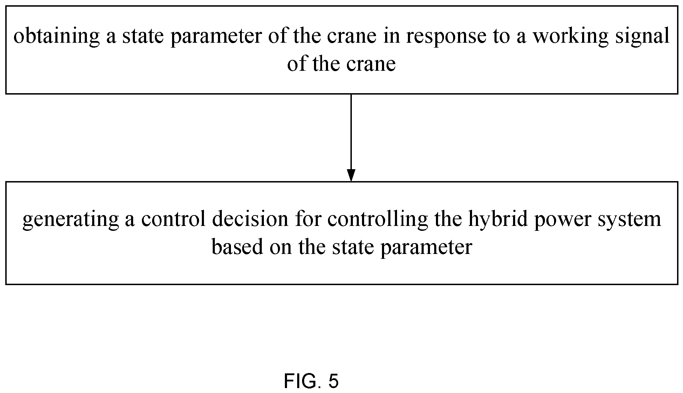

In some specific embodiments of the present application, as shown in FIG. 1 to FIG. 5, this solution provides a control method for the hybrid power system of the crane as described above, including:
obtaining state parameters of the crane in response to a working signal of the crane; and
generating a control decision for controlling the hybrid power system based on the state parameters.

In detail, the present application also proposes a control method for the hybrid power system of the crane to solve the following problems: in the related art, the selected power of a single driving device such as an engine 10 or a motor is too large under the complex working conditions of the crane, as well as the power distribution of the hybrid power system between the motor and the engine 10 is unreasonable, resulting in the defects of low power utilization, poor economy and high energy consumption. By integrating the output shaft of the drive motor and the power take off 30, the output shaft can be driven by the motor stator or the engine 10, which optimizes the power distribution of the hybrid power system and realizes dynamic matching between the drive motor and the engine 10 of the hybrid power system.

In some possible embodiments of the present application, the step of generating the control decision for controlling the hybrid power system based on the state parameters specifically includes:
obtaining a load parameter of loading operation of the crane, and sending a start signal to the drive motor 40 in response to that the load parameter is less than a preset load parameter; and
driving, via the drive motor 40, the multi-link oil pump 50 to operate and realize the loading operation of the crane.

Specifically, this embodiment provides an implementation of generating the control decision based on the load parameter of the crane. The specific control decision is determined based on the load parameter of the loading operation of the crane. When the load parameter of the loading operation of the crane is lower than the preset load parameter, the drive motor 40 receives electric energy from the power source 60 or an external power grid, and drives the multi-link oil pump 50 to work to complete the loading operation of the crane.

In some possible embodiments of the present application, the step of driving, via the drive motor 40, the multi-link oil pump 50 to operate and realize the loading operation of the crane specifically includes:
obtaining a power parameter of the crane, sending a start signal to the power source 60 in response to that the crane is not connected to the power grid, and the power source 60 provides electric energy to the drive motor 40.

Specifically, this embodiment provides an implementation method of generating the control decision based on the power parameter of the crane. The determination is made based on the power parameter of the crane. When the crane is not connected to the power grid, the drive motor 40 directly obtains electric energy from the power source 60, to realize the loading operation of the crane.

In some possible embodiments of the present application, the step of generating the control decision for controlling the hybrid power system based on the state parameter specifically includes:
obtaining the power parameter of the crane, sending a start signal to the engine 10 in response to that the crane is not connected to the power grid and the energy reserve of the power source 60 is lower than a preset value, the engine 10 drives the drive motor 40 to rotate, and the drive motor 40 charges the power source 60.

Specifically, this embodiment provides another implementation method of generating the control decision based on the power parameter of the crane. The determination is made based on the power parameters of the crane, when the crane is not connected to the power grid and the energy reserve of the power battery is lower than the preset value, the engine 10 is started. On the one hand, the engine 10 provides power for the drive motor 40 to work, and the drive motor 40 charges the power battery. On the other hand, the engine 10 can also drive the multi-link oil pump 50 to work, so as to realize the loading operation of the crane.

It should be noted that in this embodiment, the power source 60 includes the power grid and the power battery.

In some possible embodiments of the present application, the step of generating the control decision for controlling the hybrid power system based on the state parameter specifically includes:
obtaining the power parameter of the crane, if the crane is connected to the power grid and the energy reserve of the power source 60 is lower than the preset value, a start signal is sent to the drive motor 40 and the drive motor 40 charges the power source 60.

Specifically, this embodiment provides another implementation method of generating the control decision based on the power parameter of the crane. The determination is made based on the power parameter of the crane, when the crane is connected to the power grid and the energy reserve of the power battery is lower than the preset value, the driving motor 40 obtains electric energy from the power grid to work and charges the power battery.

It should be noted that in this embodiment, the power source 60 includes the power grid and the power battery.

In some possible embodiments of the present application, the step of generating the control decision for controlling the hybrid power system based on the state parameter specifically includes:
obtaining the load parameter of the loading operation of the crane, and sending the start signal to the engine 10 in response to that the load parameter is greater than the preset load parameter; and
the engine 10 drives the multi-link oil pump 50 to work to realize the loading operation of the crane.

Specifically, this embodiment provides another implementation method of generating the control decision based on the load parameter of the crane. The specific control decision is determined based on the load parameter of the loading operation of the crane. When the load parameter of the loading operation of the crane is higher than the preset load parameter, the engine 10 drives the multi-link oil pump 50 through the gearbox 20 and the power take-off 30, thereby realizing the loading operation of the crane.

In an application scenario, when the load parameter is higher than the preset load parameter, the drive motor 40 can work together with the engine 10 to form a hybrid system to meet the action requirements of the multi-link oil pump 50 during the loading operation.

In some specific implementations of the present application, this solution provides a virtual device, a memory and a processor.

The memory and the processor communicate with each other through a bus.

Computer instructions are stored in the memory and capable of being executed on the processor.

When the processor calls the computer program instructions, the above control method for the hybrid power system of the crane can be performed.

In some specific embodiments of the present application, this solution provides a crane that has the above-mentioned hybrid power system of the crane, or adopts the above-mentioned control method for the hybrid power system of the crane when performing the loading operation, or has the above-mentioned virtual device.

In the description of the embodiments of the present application, it should be noted that, unless otherwise clearly stated and limited, the terms "connected" should be understood in a broad sense. For example, it can be a fixed connection, a detachable connection, or a integrated connection; it can be a mechanical connection or an electrical connection; it can be a direct connection or an indirect connection through an intermediate medium. For those skilled in the art, the specific meanings of the above terms in the embodiments of the present application can be understood according to specific circumstances.

In the description of the specification, the description of the reference terms "one embodiment," "some embodiments," "an example," "specific examples," or "some examples" or the like means that specific features, structures, materials or characteristics described in conjunction with the embodiment or example are included in at least one embodiment or example of embodiments of the present application. In this specification, the schematic expressions of the above terms are not necessarily directed to the same embodiment or example. Furthermore, the specific features, structures, materials or characteristics described can be combined in any suitable manner in any one or more embodiments or examples. Furthermore, those skilled in the art can combine different embodiments or examples described in this specification and combine features of different embodiments or examples unless they are inconsistent with each other.

Finally, it should be noted that the above embodiments are only used to illustrate the present application, but not to limit the present application. Although the present application has been described in detail with reference to the embodiments, those skilled in the art should understand that various combinations, modifications or equivalent substitutions can be made to the technical solutions of the present application, which cannot depart from the spirit and scope of the present application, and should fall within the scope of the present application.

## Claims

1. A hybrid power system of a crane, **characterized by** comprising: an engine, a gearbox, a power take-off, a drive motor, a multi-link oil pump, a power source, a central controller and a hybrid controller;
wherein an output end of the engine is connected to an input end of the gearbox; one end of the power take-off is connected to an output end of the gearbox and the other end of the power take-off is connected to an input end of the drive motor; an output end of the drive motor is connected to the multi-link oil pump; the central controller is connected to the engine and the hybrid controller respectively; the hybrid controller is connected to the drive motor and the power source respectively; the engine, the gearbox, the power take-off, the drive motor and the multi-link oil pump are connected to form a first hydraulic path for providing power for loading operation of the crane; and the power source, the drive motor and the multi-link oil pump are connected to form a second hydraulic path for providing power for the loading operation of the crane.

2. The hybrid power system of the crane according to claim 1, wherein the power source comprises: a power grid and/or a power battery; the engine, the gearbox, the power take-off, the drive motor and the power battery are connected to form a first charging path for charging the power battery; and the power grid, the drive motor and the power battery are connected to form a second charging path for charging the power battery.

3. The hybrid power system of the crane according to claim 1, further comprising: an electric load connected to the power source; wherein the power source and the electric load are connected to form a first electric power path for providing power to the electric load; and the engine, the gearbox, the power take-off, the drive motor and the electric load are connected to form a second electric power path for providing power to the electric load.

4. The hybrid power system of the crane according to claim 1, further comprising: an angle gear box, wherein an input end of the angle gear box is connected to the power take-off, and an output end of the angle gear box is connected to the drive motor.

5. The hybrid power system of the crane according to any one of claims 1 to 4, further comprising: a transmission shaft and a drive axle, wherein one end of the transmission shaft is connected to the other output end of the gearbox, and the other end of the transmission shaft is connected to the drive axle.

6. A control method for a hybrid power system of a crane according to any one of claims 1 to 5, **characterized by** comprising:
obtaining a state parameter of the crane in response to a working signal of the crane; and
generating a control decision for controlling the hybrid power system based on the state parameter.

7. The control method for the hybrid power system of the crane according to claim 6, wherein the step of generating the control decision for controlling the hybrid power system based on the state parameter comprises:
obtaining a load parameter of loading operation of the crane, sending a start signal to the drive motor in response to that the load parameter is less than a preset load parameter; and
driving, via the drive motor, the multi-link oil pump to operate and realize the loading operation of the crane.

8. The control method for the hybrid power system of the crane according to claim 7, wherein the step of driving, via the drive motor, the multi-link oil pump to operate and realize the loading operation of the crane comprises:
obtaining a power parameter of the crane, in response to that the crane is not connected to the power grid, sending a start signal to the power source for providing electrical energy to the drive motor.

9. The control method for the hybrid power system of the crane according to claim 6, wherein the step of generating the control decision for controlling the hybrid power system based on the state parameter comprises:
obtaining the power parameter of the crane, in response to that the crane is not connected to the power grid and an energy reserve of the power source is lower than a preset value, sending a start signal to the engine, wherein the engine drives the drive motor to rotate, and the drive motor charges the power source.

10. The control method for the hybrid power system of the crane according to claim 6, wherein the step of generating the control decision for controlling the hybrid power system based on the state parameter comprises:
obtaining the power parameter of the crane, in response to that the crane is connected to the power grid and an energy reserve of the power source is lower than a preset value, sending a start signal to the drive motor, wherein the drive motor charges the power source.

11. The control method for the hybrid power system of the crane according to claim 6, wherein the step of generating the control decision for controlling the hybrid power system based on the state parameter comprises:
obtaining a load parameter of loading operation of the crane, in response to that the load parameter is greater than a preset load parameter, sending a start signal to the engine; and
driving, via the engine, the multi-link oil pump to operate and realize the loading operation of the crane.

12. A virtual device, **characterized by** comprising a memory and a processor; wherein the memory and the processor communication with each other through a bus; computer instructions executable on the processor are stored in the memory; when the processor calls the computer program instructions, the control method for the hybrid power system of the crane according to any one of claims 6 to 11 are implemented.

13. A crane, **characterized by** comprising the hybrid power system of the crane according to any one of claims 1 to 5, or adopting the control method for the hybrid power system of the crane according to any one of claims 6 to 11 when performing loading operation, or comprising the virtual device according to claim 12.
